# EUROPEAN PATENT APPLICATION

(11) **EP 4 429 318 A1**
(43) Date of publication of application: **11.09.2024**
(21) Application number: 22889914.2
(22) Date of filing: 28.10.2022
(51) Int. Cl.: H04W 24/10, H04W 92/20

(54) **WIRELESS BASE STATION, WIRELESS COMMUNICATION SYSTEM, AND WIRELESS COMMUNICATION METHOD**

(30) Priority: 04.11.2021 JP 2021180684
(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2022/040506
(87) International publication number: WO 2023/080094

(57) **Abstract**

A radio base station configures multiple measurement gap patterns, and transmits configuration information including a configuration of the multiple measurement gap patterns to a different radio base station.

## Description

### TECHNICAL FIELD

The present disclosure relates to a radio base station, a radio communication system, and a radio communication method that support the extension of a measurement gap.

### BACKGROUND ART

The 3rd Generation Partnership Project (3GPP) has prepared a specification for Long Term Evolution (LTE) and the 5th generation mobile communication system (which may be called 5G, New Radio (NR), or Next Generation (NG)), and is also in the process of specifying the next generation called Beyond 5G, 5G Evolution, or 6G.

In 3GPP Release-17, the extension of a measurement gap (MG) has been considered (Non-Patent Literature 1). For example, support for multiple MG patterns has been considered.

Support for the extension of such an MG between nodes such as radio base stations has also been considered (Non-Patent Literature 2). Specifically, it has been considered that a master node (MN) and a secondary node (SN) exchange information relating to multiple MG patterns using messages in the radio resource control layer (RRC) between the nodes.

### CITATION LIST

### NON-PATENT LITERATURE

NON-PATENT LITERATURE 1: "Revised WID on NR and MR-DC measurement gap enhancements", RP-211591, 3GPP TSG RAN Meeting #92e, 3GPP, June 2021
NON-PATENT LITERATURE 2: "Multiple concurrent and independent measurement gap patterns", R2-2109789, 3GPP TSG-RAN WG2 Meting #116-e, 3GPP, November 2021

### SUMMARY OF THE INVENTION

However, since there is an upper limit to the number of MGs that can be configured concurrently by terminals (User Equipment, UE), coordination between nodes is required when the extension of an MG described above is also supported between the nodes (MN/SN).

Therefore, the following disclosure has been made in view of such circumstances, and an object of the present disclosure is to provide a radio base station, a radio communication system, and a radio communication method that can reliably support multiple MG patterns between nodes.

An aspect of the present disclosure is a radio base station (for example, gNB 100A) including: a control unit (control unit 140) that configures multiple measurement gap patterns; and a transmission unit that transmits configuration information including a configuration of the multiple measurement gap patterns to a different radio base station (for example, gNB 100B).

An aspect of the present disclosure is a radio communication system including a first radio base station and a second radio base station, in which the first radio base station includes: a control unit that configures multiple measurement gap patterns; and a transmission unit that transmits configuration information including a configuration of the multiple measurement gap patterns to a different radio base station, and the second radio base station includes a reception unit that receives the configuration information.

An aspect of the present disclosure is A radio communication method including: a step of configuring, by a first base station, multiple measurement gap patterns; a step of transmitting, by the first base station, configuration information including a configuration of the multiple measurement gap patterns to a different radio base station; and a step of receiving, by a second base station, the configuration information.

### BRIEF DESCRIPTION OF THE DRAWINGS

[FIG. 1] FIG. 1 is an overall schematic diagram of a radio communication system 10.
[FIG. 2] FIG. 2 is a functional block diagram of an eNB 100A and a gNB 100B.
[FIG. 3] FIG. 3 is a functional block diagram of UE 200.
[FIG. 4] FIG. 4 is a diagram illustrating an example of a possible combination of MGs in UE that supports Per-FR gaps.
[FIG. 5] FIG. 5 is a diagram illustrating an example sequence regarding a configuration of measurement gap patterns between UE 200, MN, and SN.
[FIG. 6] FIG. 6 is a diagram illustrating a configuration example of CG-Config.
[FIG. 7] FIG. 7 is a diagram (continued from FIG. 6) illustrating the configuration example of CG-Config.
[FIG. 8] FIG. 8 is a diagram illustrating a configuration example of CG-ConfigInfo.
[FIG. 9] FIG. 9 is a diagram illustrating an example of a hardware configuration of the eNB 100A, the gNB 100B, and the UE 200.
[FIG. 10] FIG. 10 is a diagram illustrating a configuration example of a vehicle 2001.

### DESCRIPTION OF EMBODIMENTS

Embodiments will be described below with reference to the drawings. Note that the same or similar reference numerals have been attached to the same functions and configurations, and the description thereof will be omitted as appropriate.

### (1) Overall schematic configuration of radio communication system

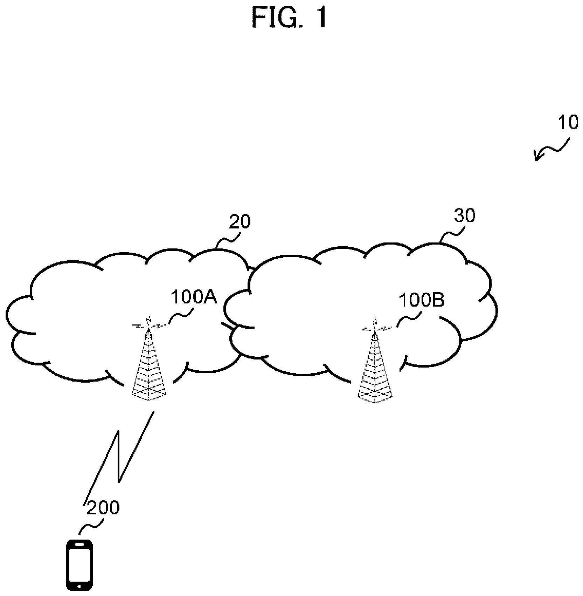

FIG. 1 is an overall schematic diagram of a radio communication system 10 according to the present embodiment. The radio communication system 10 is a radio communication system according to Long Term Evolution (LTE) and 5G New Radio (NR). LTE may be referred to as 4G, or NR may be referred to as 5G. The radio communication system 10 may be a radio communication system according to a scheme called Beyond 5G, 5G Evolution, or 6G.

LTE and NR may be interpreted as radio access technology (RAT). In the present embodiment, LTE may be referred to as a first radio access technology, and NR may be referred to as a second radio access technology.

The radio communication system 10 includes an Evolved Universal Terrestrial Radio Access Network 20 (hereinafter, E-UTRAN 20), and a Next Generation-Radio Access Network 30 (hereinafter, NG RAN 30). The radio communication system 10 also includes a terminal 200 (hereinafter, UE 200, User Equipment).

The E-UTRAN 20 includes an eNB 100A , which is a radio base station according to LTE. The NG RAN 30 includes a gNB 100B, which is a radio base station according to 5G (NR). The NG RAN 30 is connected to a User Plane Function , which is included in the 5G system architecture and provides user plane functionality.

The E-UTRAN 20 and NG RAN 30 (which may be eNB 100A or gNB 100B) may be referred to simply as a network. The specific configuration of the radio communication system 10 including the number of eNBs, gNBs and UEs is not limited to the example illustrated in FIG. 1.

The eNB 100A, the gNB 100B, and the UE 200 may support carrier aggregation (CA) using multiple component carriers (CCs), dual connectivity for concurrently transmitting component carriers between multiple NG-RAN Nodes and UE, and the like.

The eNB 100A, the gNB 100B, and the UE 200 perform radio communication via a radio bearer, specifically, via a Signalling Radio Bearer (SRB) or a DRB Data Radio Bearer (DRB).

In the present embodiment, Multi-Radio Dual Connectivity (MR-DC) in which the eNB 100A constitutes a master node (MN) and the gNB 100B constitutes a secondary node (SN), specifically, E-UTRA-NR Dual Connectivity (EN-DC) may be performed. Alternatively, NR-E-UTRA Dual Connectivity (NE-DC) in which the gNB 100B constitutes an MN) and the eNB 100A constitutes an SN may be performed. Alternatively, NR-NR Dual Connectivity (NR-DC) in which the gNB constitutes a MN and an SN may be performed.

Thus, the UE 200 supports dual connectivity that is connected to the eNB 100A and the gNB 100B.

The eNB 100A is included in a master cell group (MCG), and the gNB 100B is included in a secondary cell group (SCG). That is, the gNB 100B is an SN included in the SCG. Further, the eNB 100A (MN) may include a first radio base station, and the gNB 100B (SN) may include a second radio base station.

The eNB 100A and the gNB 100B may be referred to as a radio base station or a network device.

The secondary cell (SCell) may also include a primary SCell (PSCell). A PSCell is a type of secondary cell. A PSCell means a primary SCell (secondary cell) and may be interpreted as corresponding to any of several SCells . The secondary cell may be read as a secondary node (SN), or a secondary cell group (SCG).

The radio communication system 10 can support the extension of a measurement gap (MG). The measurement gap (MG) is understood as a period during which no data and no control signal are transmitted and received for performing the measurement of the quality of a desired radio frequency (RF). As an example, the measurement gap is a period during which no data and no control signal are transmitted and received in order to perform radio frequency (RF) tuning (RF retuning). Specifically, in the MG, data (Physical Downlink Shared Channel (PDSCH) and Physical Uplink Shared Channel (PUSCH)), and a control signal (Physical Downlink Control Channel (PDCCH) and Physical Uplink Control Channel (PUCCH)) may not be transmitted and received.

In the present embodiment, the radio communication system 10 may support multiple measurement gap patterns (MG patterns).

### (2) Functional block configuration of radio communication system

Next, a functional block configuration of the radio communication system 10 will be described. Specifically, the functional block configuration of the eNB 100A, the gNB 100B, and the UE 200 will be described.

### (2.1) eNB 100A and gNB 100B

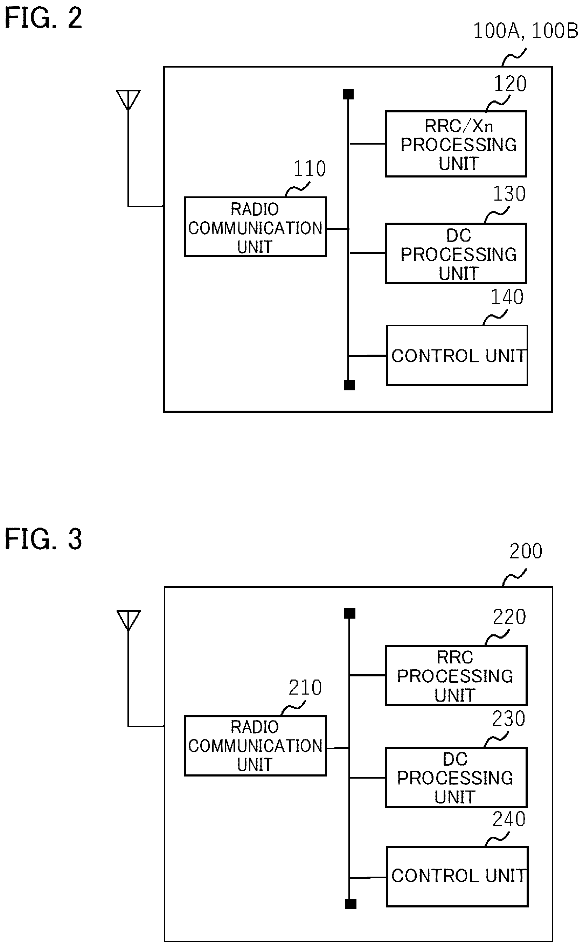

FIG. 2 is a functional block diagram of the eNB 100A and the gNB 100B. As illustrated in FIG. 2, the eNB 100A and the gNB 100B include a radio communication unit 110, an RRC/Xn processing unit 120, a DC processing unit 130, and a control unit 140.

The radio communication unit 110 transmits a downlink signal (DL signal) according to a predetermined radio system (LTE or NR). In addition, the radio communication unit 110 receives an uplink signal (UL signal) according to a predetermined radio system (LTE or NR).

The RRC/Xn processing unit 120 performs various processing relating to a radio resource control layer (RRC) and an Xn interface. Specifically, the RRC/Xn processing unit 120 can transmit an RRC Reconfiguration to the UE 200. In addition, the RRC/Xn processing unit 120 can receive an RRC Reconfiguration Complete, which is a response to the RRC Reconfiguration, from the UE 200.

In the present embodiment, the eNB 100A supports LTE. In this case, the name of the RRC message may be an RRC Connection Reconfiguration, or an RRC Connection Reconfiguration Complete.

In the case where a radio base station supports LTE (Evolved Universal Terrestrial Radio Access Network (E-UTRAN)), an X2 interface may be used instead of an Xn interface. Alternatively, the Xn and X2 interfaces may be used together. The Xn interface will be described below as an example.

The RRC/Xn processing unit 120 can transmit and receive inter-node messages via the Xn interface. For example, when constituting the secondary node (SN), the RRC/Xn processing unit 120 may receive a message relating to an SCell (which may include a PSCell; hereinafter, the same shall apply) from a different radio base station, specifically, from the master node (MN).

The RRC/Xn processing unit 120 can transmit configuration information including a configuration of multiple measurement gap patterns to a different radio base station. In the present embodiment, the RRC/Xn processing unit 120 may constitute a transmission unit.

The RRC/Xn processing unit 120 may transmit CG-ConfigInfo (or CG-Config) including the configuration of multiple measurement gap patterns to the SN (or MN). The CG-ConfigInfo and CG-Config may include an information element of measGapConfig, which is the configuration information of the MG.

The RRC/Xn processing unit 120 may transmit configuration information including at least any of identification information of a measurement gap, a setting value of the measurement gap, and a purpose of the measurement gap. Specifically, the RRC/Xn processing unit 120 may transmit CG-ConfigInfo (or CG-Config) including a measurement gap ID, gapConfig, and a gap purpose (for example, per UE, per FR1, per FR2, PRS (Positioning RS), and the like). Such configuration information may be called a measGapConfig list.

The frequency range (FR1 and FR2) may be specified as follows:
- FR1: 410 MHz to 7.125 GHz
- FR2: 24.25 GHz to 52.6 GHz

Further, the RRC/Xn processing unit 120 may receive a transmission request for the configuration information from a different radio base station (for example, SN). In the present embodiment, the RRC/Xn processing unit 120 may constitute a reception unit. Specifically, the RRC/Xn processing unit 120 may receive a request for the measGapConfig list transmitted from the SN.

Further, the RRC/Xn processing unit 120 may receive an inquiry about a configuration status of the measurement gap from a different radio base station (for example, SN). Specifically, the RRC/Xn processing unit 120 may receive a request for an activation status of measGapConfig.

The DC processing unit 130 performs processing relating to dual connectivity, specifically, Multi-RAT Dual Connectivity (MR-DC). In the present embodiment, since the eNB 100A supports LTE and the gNB 100B supports NR, the DC processing unit 130 may perform processing relating to E-UTRA-NR Dual Connectivity (EN-DC). Note that, as described above, the type of DC is not limited, and the DC processing unit 130 may support, for example, NR-E-UTRA Dual Connectivity (NE-DC), or NR-NR Dual Connectivity (NR-DC).

The DC processing unit 130 can transmit and receive messages specified in 3GPP TS37.340 or the like, and perform processing for configuring and releasing DC between the eNB 100A, the gNB 100B, and the UE 200.

The control unit 140 controls each function block constituting the eNB 100A. In particular, in the present embodiment, the control unit 140 can configure multiple measurement gap patterns. As described above, the measurement gap pattern may include at least any of the identification information of a measurement gap, a setting value of the measurement gap, and a purpose of the measurement gap.

In the present embodiment, a channel includes a control channel and a data channel. The control channel includes a PDCCH (Physical Downlink Control Channel), a PUCCH (Physical Uplink Control Channel), a PRACH (Physical Random Access Channel), a PBCH (Physical Broadcast Channel), and the like.

The data channel includes a PDSCH (Physical Downlink Shared Channel), a PUSCH (Physical Uplink Shared Channel), and the like.

A reference signal includes a Demodulation Reference Signal (DMRS), a Sounding Reference Signal (SRS), a Phase Tracking Reference Signal (PTRS), a Channel State Information-Reference Signal (CSI-RS), and the like. A signal includes a channel and a reference signal. Further, data may mean data transmitted via a data channel.

### (2.2) UE 200

FIG. 3 is a functional block diagram of the UE 200. As illustrated in FIG. 3, the UE 200 includes a radio communication unit 210, an RRC processing unit 220, a DC processing unit 230, and a control unit 240.

The radio communication unit 210 transmits an uplink signal (UL signal) according to LTE or NR. In addition, the radio communication unit 210 receives a downlink signal (DL signal) according to LTE or NR. In other words, the UE 200 can access the eNB 100A (E-UTRAN 20) and the gNB 100B (NG RAN 30), and can support dual connectivity (specifically, EN-DC).

The RRC processing unit 220 performs various processing in the radio resource control layer (RRC). Specifically, the RRC processing unit 220 can transmit and receive a message in the radio resource control layer.

The RRC processing unit 220 can receive an RRC Reconfiguration from the network, specifically, from the E-UTRAN 20 (or NG RAN 30) . In addition, the RRC processing unit 220 can transmit an RRC Reconfiguration Complete, which is a response to the RRC Reconfiguration, to the network.

The DC processing unit 230 performs processing relating to dual connectivity, specifically, MR-DC. As described above, in the present embodiment, the DC processing unit 230 may perform processing relating to EN-DC; however, the DC processing unit 230 may perform processing relating to NE-DC and/or NR-DC.

The DC processing unit 230 can access each of the eNB 100A and the gNB 100B, and perform a configuration in a plurality of layers (a media access control layer (MAC), a radio link control layer (RLC), a packet data convergence protocol layer (PDCP), and the like) including the RRC.

The control unit 240 controls each function block constituting the UE 200. In particular, in the present embodiment, the control unit 240 can perform measurement based on a measurement gap (MG).

Specifically, the control unit 240 may perform measurement according to SS/PBCH block (SSB)-based RRM Measurement Timing Configuration (SMTC).

Also, the following two types of MG may be specified.
- Per-UE gap (similar to MG in LTE)
- Per-FR gap

In Per-UE gap, only one MG can be configured in UE 200, regardless of a frequency band of a cell to be measured. Further, data cannot be not transmitted or received during MG.

In Per-FR gap, different MGs can be configured for FR1 measurement of LTE and NR, and for FR2 measurement of NR. For example, communication can continue in FR1 of LTE and NR during which MG is applied for FR2 measurement of NR.

### (3) Operation of radio communication system

Next, an operation of the radio communication system 10 will be described. Specifically, an operation relating to the extension of a measurement gap (MG) will be described.

### (3.1) Assumption and problem

In 3GPP Release-15 and 16, an inter-node message, such as CG-ConfigInfo as specified in TS38.331, Chapter 11.2.2, allows the MN to notify the SN of per UE, per FR1/FR2 measurement gap patterns configured by the MN, and a gap purpose.

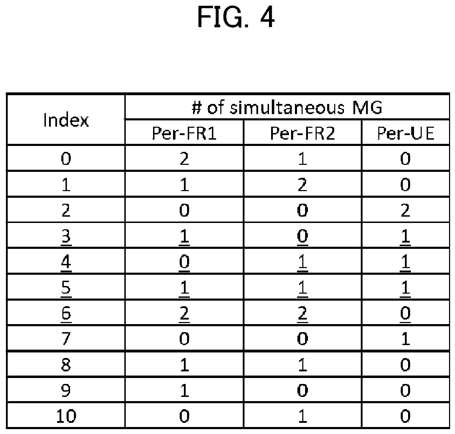

Meanwhile, in 3GPP Release-17, multiple MGs (concurrent MGs) are introduced concurrently. FIG. 4 illustrates an example of a possible combination of MGs in the UE that supports Per-FR gaps.

As illustrated in FIG. 4, there is an upper limit to per UE, per FR1/FR2, and PRS measurement gaps that can be configured concurrently as the capability of UE.

Accordingly, the problem is how the MN and SN coordinate multiple measurement gap patterns. Since the MN and SN cannot recognize a status (activated/deactivated) of pre-configured measGapConfig configured by the MN and SN, coordination is required between the MN and SN.

### (3.2) Operation example

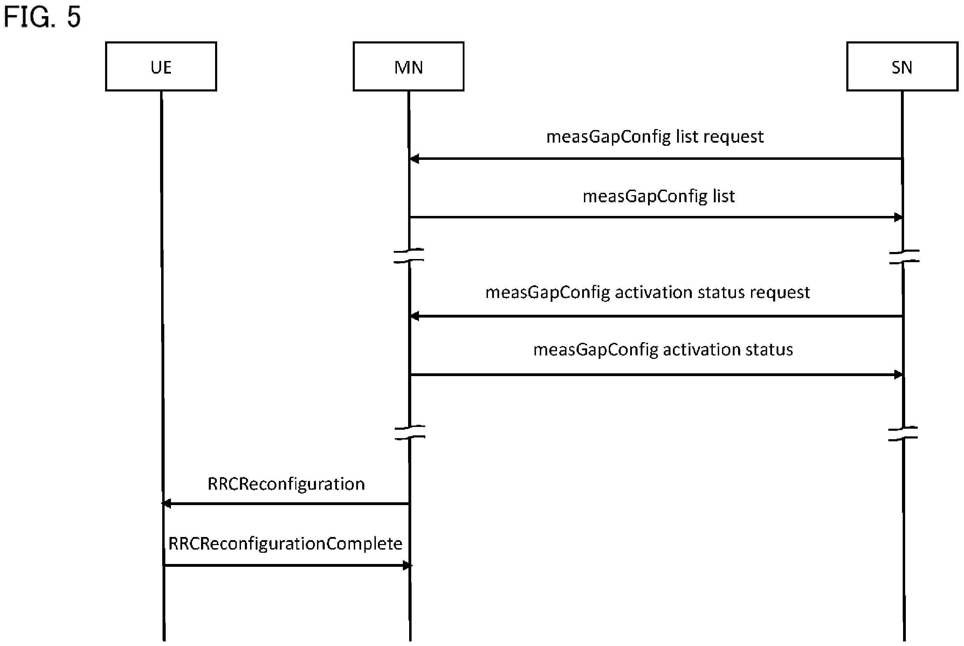

FIG. 5 illustrates a sequence example regarding a configuration of measurement gap patterns between UE 200, MN, and SN.

As illustrated in FIG. 5, the MN may notify the SN of a measGapConfig list. The measGapConfig list may be configuration information including a measurement gap ID, gapConfig, and a gap purpose (per UE, per FR1, per FR2, and PRS (Positioning RS)) for each measGapConfig, and the MN may notify the SN of the configuration information.

In addition, for each measGapConfig, the MN may notify the SN of an indication indicating that the MG is activated/deactivated (or pre-configured) .

The SN may check the measGapConfig list notified by the MN, and determine the configuration contents of the MG so as not to exceed the capability of the UE or conflict with the contents of the measGapConfig configured by the MN. The configuration contents of the MG may be configured for the UE 200 by using a message of the RRC.

As illustrated in FIG. 5, the SN may request a measGapConfig list from the MN. The SN may transmit the configured measGapConfig list to the MN.

Further, as illustrated in FIG. 5, the SN may request an activation status of the pre-configured measGapConfig from the MN (or, such a request may be transmitted from the MN to the SN).

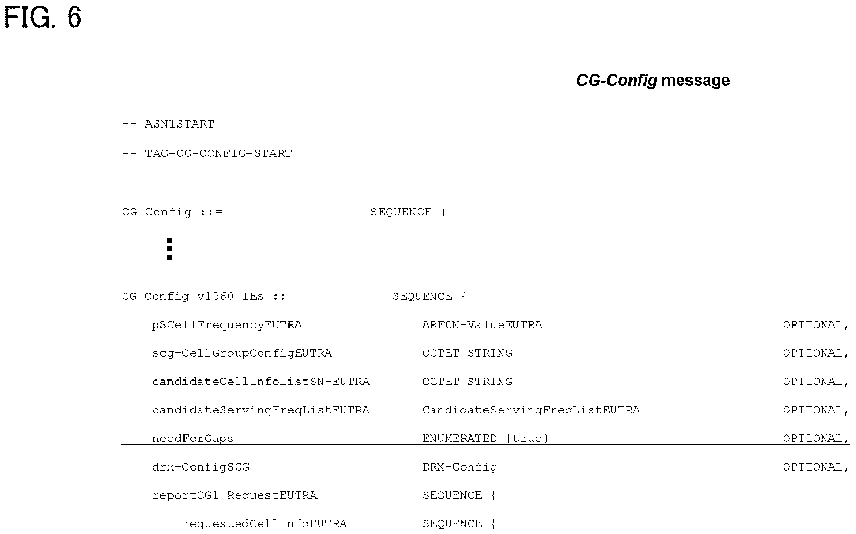

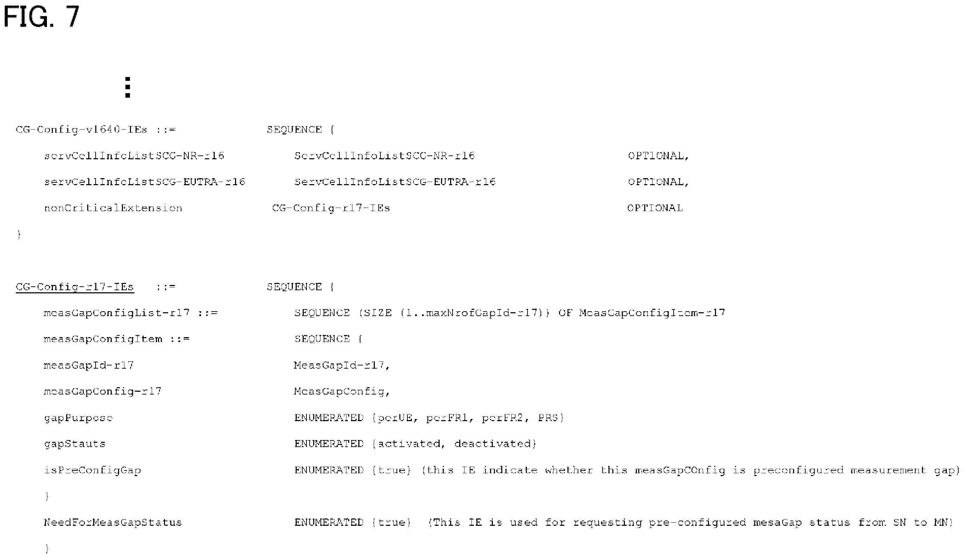

FIGS. 6 and 7 illustrate a configuration example of CG-Config. CG-Config may be transmitted from SN (SgNB or SeNB) to MN (MeNB or MgNB) .

As illustrated in FIGS. 6 and 7, CG-Config may include a field of needForGaps. needForGaps may indicate, for example, whether the SN requests the gNB to configure the MG in NE-DC.

The CG-Config-r17 IEs may include a measurement gap ID, gapConfig, and a gap purpose described above.

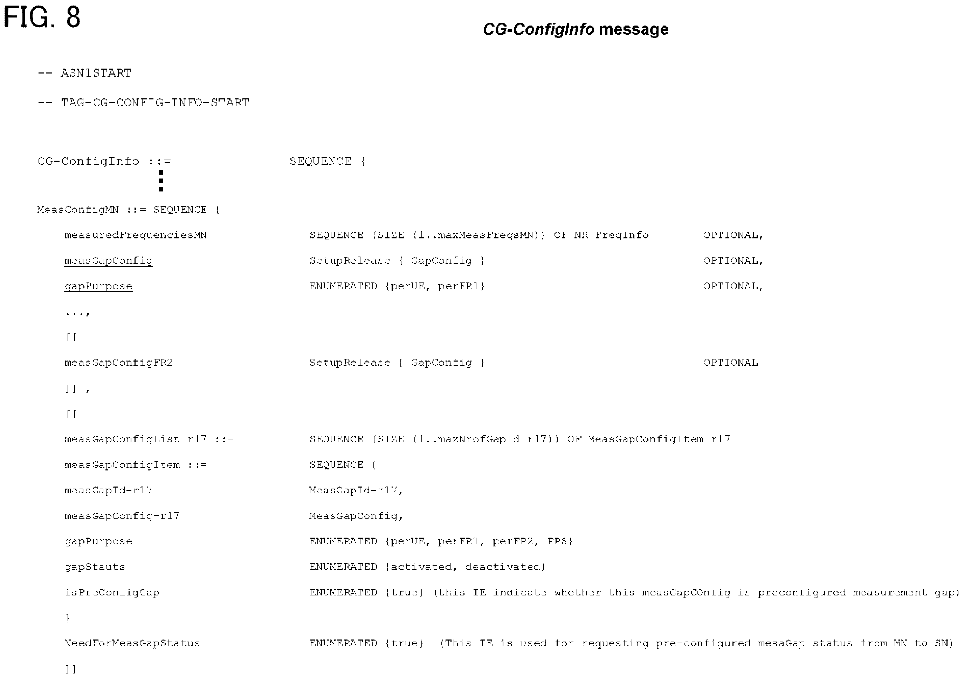

FIG. 8 illustrates a configuration example of CG-ConfigInfo. CG-ConfigInfo may be transmitted from MN (MeNB or MgNB) to SN (SgNB or SeNB).

As illustrated in FIG. 8, measGapConfigList-r17 may include a measurement gap ID, gapConfig, and a gap purpose described above. measGapConfigList-r17 may also include gapStatus, isPreConfigGap, and the like.

### (4) Operation and effect

According to the above-described embodiment, the following operation and effect can be obtained. Specifically, according to the eNB 100A (MN) and the gNB 100B (SN), even if the concurrent measurement gap config (concurrent configuration of multiple MGs) and the pre-configured measurement gap are supported, coordination of the MG between the MN and the SN becomes possible so as not to exceed the capability of the UE.

In other words, the concurrent measurement gap and the pre-configured measurement gap can be configured in DC, thereby making it possible to reliably support the multiple MG patterns between the nodes.

The measGapConfig list (configuration information) may include at least any of identification information of the MG, a configuring value of the MG, and a purpose of the MG. This makes it possible to control the configuration of the MG in more detail.

In addition, the SN can transmit a transmission request for configuration information and/or an inquiry about a configuration status of the measurement gap to the MN, and the MN can provide the SN with information in response to the transmission request and/or inquiry. This makes it possible to configure the MG flexibly depending on the status.

### (5) Other Embodiments

For example, in the above-described embodiment, an example has been described regarding an EN-DC in which the MN is an eNB and the SN is a gNB; however, as described above, another DC may be possible. For example, an NR-DC is possible in which the MN is a gNB and the SN is a gNB, or an NE-DC is also possible in which the MN is a gNB and the SN is an eNB.

In the above description, configure, activate, update, indicate, enable, specify, and select may be interchangeably interpreted. Similarly, link, associate, correspond, and map may be interchangeably interpreted, and allocate, assign, monitor, and map may also be interchangeably interpreted.

In addition, specific, dedicated, UE-specific, and UE-dedicated may be interchangeably interpreted. Similarly, common, shared, groupcommon, UE-common, and UE-shared may be interchangeably interpreted.

The block diagram (FIGS. 2 and 3) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

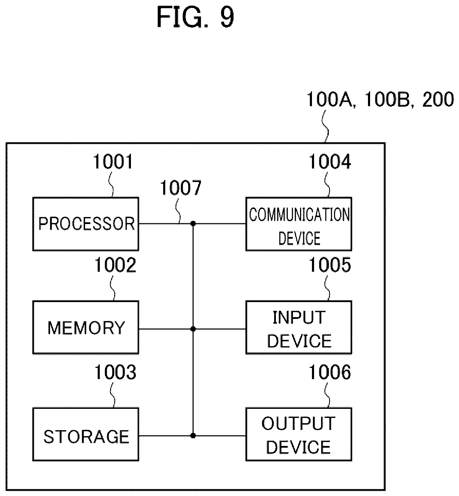

Further, the above-described eNB 100A, gNB 100B and UE 200 (the device) may function as a computer that performs processing of a radio communication method of the present disclosure. FIG. 9 is a diagram illustrating an example of a hardware configuration of the device. As illustrated in FIG. 9, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIGS. 2 and 3) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultrawideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like) , or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station.

A radio frame may be composed of one or more frames in the time domain.

Each of the one or more frames in the time domain may be referred to as a subframe. A subframe may be further composed of one or more slots in the time domain.

The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain.

The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a subcarrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

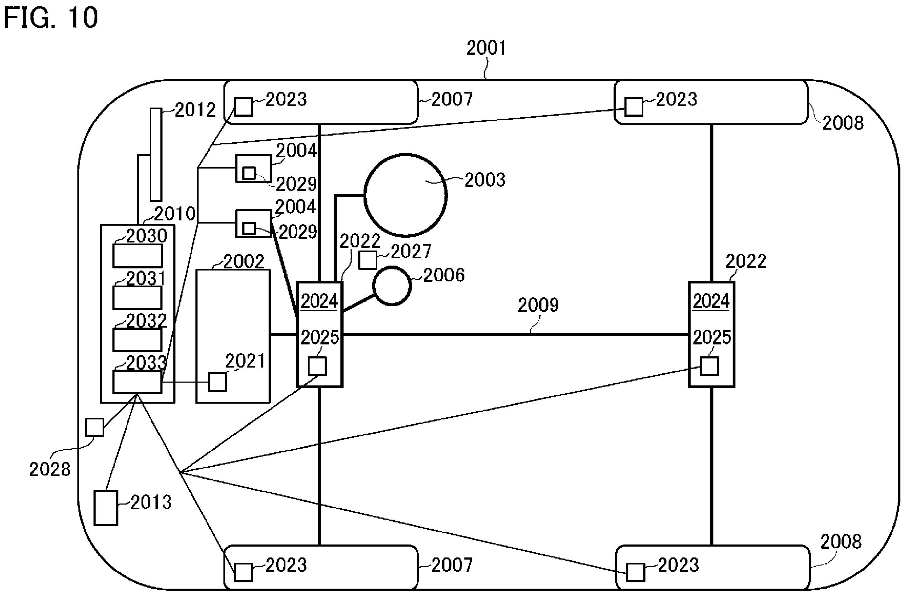

FIG. 10 shows a configuration example of a vehicle 2001. As shown in Figure 10, the vehicle 2001 includes a drive 2002, a steering 2003, an accelerator pedal 2004, a brake pedal 2005, a shift lever 2006, left and right front wheels 2007, left and right rear wheels 2008, an axle 2009, an electronic controller 2010, various sensors 2021 to 2029, an information service unit 2012, and a communication module 2013.

Examples of the drive 2002 include, an engine, a motor, and a hybrid of an engine and a motor.

The steering 2003 includes at least a steering wheel (also called a handle) and steers at least one of the front and rear wheels based on an operation of a steering wheel operated by a user.

The electronic controller 2010 includes a microprocessor 2031, a memory (ROM, RAM) 2032, and a communication port (IO port) 2033. The electronic controller 2010 receives signals from various sensors 2021 to 2027 provided in the vehicle. The electronic controller 2010 may be called an ECU (Electronic Control Unit).

The signals from the various sensors 2021 to 2028 include a current signal from a current sensor 2021 for sensing current of a motor, a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 includes various devices such as a car navigation system, an audio system, a speaker, a television, and a radio for providing various information such as driving information, traffic information, and entertainment information, and one or more ECUs for controlling these devices.

The information service unit 2012 provides various multimedia information and multimedia services to an occupant of the vehicle 1 by using information acquired from an external device through a communication module 2013 and the like.

A driver support system unit 2030 comprises various devices such as a millimeter wave radar, a light detection and ranging (LiDAR), a camera, a positioning locator (for example, GNSS), map information (for example, high-definition (HD) maps, autonomous vehicle (AV) maps, and the like), a gyroscopic system (for example, an inertial measurement unit (IMU), an inertial navigation system (INS), and the like), an artificial intelligence (AI) chip, and an AI processor for providing functions to prevent accidents or reduce a driving load of a driver, and one or more ECUs for controlling these devices. Further, the driver support system unit 2030 transmits and receives various kinds of information through the communication module 2013 to realize a driver support function or an automatic driving function.

The communication module 2013 can communicate with the microprocessor 2031 and components of the vehicle 1 through a communication port. For example, the communication module 2013 transmits and receives data through the communication port 2033 to and from the drive 2002, steering 2003, accelerator pedal 2004, brake pedal 2005, shift lever 2006, left and right front wheels 2007, left and right rear wheels 2008, axle 2009, microprocessor 2031 in the electronic control 2010, memory (ROM, RAM) 2032, and sensor 2021 to 2028.

The communication module 2013 is a communication device that can be controlled by the microprocessor 2031 of the electronic controller 2010 and can communicate with an external device. For example, The communication module 2013 transmits and receives various kinds of information via radio communication with the external device. The communication module 2013 may be placed inside or outside the electronic control unit 2010. Examples of the external device may include a base station, a mobile station, and the like.

The communication module 2013 transmits a current signal coming from a current sensor and input to the electronic controller 2010 to an external device via radio communication. Further, the communication module 2013 transmits a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic controller 2010 to an external device via radio communication.

The communication module 2013 receives various information (traffic information, signal information, inter-vehicle information, and the like.) transmitted from the external device and displays on the information service unit 2012 provided in the vehicle. Further, the communication module 2013 stores various information received from the external device in a memory 2032 usable by the microprocessor 2031. Based on the information stored in the memory 2032, the microprocessor 2031 may control the drive 2002, the steering 2003, the accelerator pedal 2004, the brake pedal 2005, the shift lever 2006, the left and right front wheels 2007, the left and right rear wheels 2008, the axle 2009, the sensors 2021 to 2028, and the like. provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10:: radio communication system
- 20:: E-UTRAN
- 30:: NG-RAN
- 40:: UPF
- 100A:: eNB
- 100B:: gNB
- 110:: radio communication unit
- 120:: RRC/Xn processing unit
- 130:: DC processing unit
- 140:: control unit
- 200:: UE
- 210:: radio communication unit
- 220:: RRC processing unit
- 230:: DC processing unit
- 240:: control unit
- 1001:: processor
- 1002:: memory
- 1003:: storage
- 1004:: communication device
- 1005:: input device
- 1006:: output device
- 1007:: bus
- 2001:: vehicle
- 2002:: drive unit
- 2003:: steering unit
- 2004:: accelerator pedal
- 2005:: brake pedal
- 2006:: shift lever
- 2007:: left and right front wheels
- 2008:: left and right rear wheels
- 2009:: axle
- 2010:: electronic control unit
- 2012:: information service unit
- 2013:: communication module
- 2021:: current sensor
- 2022:: rotation speed sensor
- 2023:: air pressure sensor
- 2024:: vehicle speed sensor
- 2025:: acceleration sensor
- 2026:: brake pedal sensor
- 2027:: shift lever sensor
- 2028:: object detection sensor
- 2029:: accelerator pedal sensor
- 2030:: driving support system unit
- 2031:: microprocessor
- 2032:: memory (ROM, RAM)
- 2033:: communication port

## Claims

1. A radio base station comprising:
a control unit that configures multiple measurement gap patterns; and
a transmission unit that transmits configuration information including a configuration of the multiple measurement gap patterns to a different radio base station.

2. The radio base station according to claim 1, wherein
the transmission unit transmits the configuration information including at least any of identification information of a measurement gap, a setting value of the measurement gap, and a purpose of the measurement gap.

3. The radio base station according to claim 1, further comprising:
a reception unit that receives a transmission request for the configuration information from the different radio base station.

4. The radio base station according to claim 3, wherein
the reception unit receives an inquiry about a configuration status of the measurement gap from the different radio base station.

5. A radio communication system including a first radio base station and a second radio base station, wherein
the first radio base station includes:
a control unit that configures multiple measurement gap patterns; and
a transmission unit that transmits configuration information including a configuration of the multiple measurement gap patterns to a different radio base station, and
the second radio base station includes a reception unit that receives the configuration information.

6. A radio communication method comprising:
a step of configuring, by a first base station, multiple measurement gap patterns;
a step of transmitting, by the first base station, configuration information including a configuration of the multiple measurement gap patterns to a different radio base station; and
a step of receiving, by a second base station, the configuration information.
